(19) Europäisches Patentamt
European Patent Office
Office européen des brevets

(11) **EP 3 740 411 B1**

(12) **FASCICULE DE BREVET EUROPEEN**

(45) Date de publication et mention
de la délivrance du brevet:
**07.06.2023 Bulletin 2023/23**

(21) Numéro de dépôt: **19706392.8**

(22) Date de dépôt: **31.01.2019**

(51) Classification Internationale des Brevets (IPC):
**B61L 23/04** *(2006.01)* **B61L 15/00** *(2006.01)*

(52) Classification Coopérative des Brevets (CPC):
**B61L 23/04; B61L 23/042;** B61L 15/009;
B61L 23/041

(86) Numéro de dépôt international:
**PCT/EP2019/052444**

(87) Numéro de publication internationale:
**WO 2019/154719 (15.08.2019 Gazette 2019/33)**

(54) **PROCÉDÉ DE REPÉRAGE DE POINTS OU LIGNES D'INTÉRÊT SUR UNE VOIE FERRÉE**

VERFAHREN ZUM LOKALISIEREN VON PUNKTEN ODER LINIEN VON INTERESSE AUF EINER BAHNSTRECKE

METHOD OF IDENTIFICATION OF POINTS OR LINES OF INTEREST ON A RAILWAY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.02.2018 FR 1850960
06.02.2018 FR 1850961
06.02.2018 FR 1850962**

(43) Date de publication de la demande:
**25.11.2020 Bulletin 2020/48**

(73) Titulaire: **Matisa Matériel Industriel S.A.
1023 Crissier (CH)**

(72) Inventeurs:
• **STUPAR, Milan
1008 PRILLY (CH)**

• **CHINOUNE, Youcef
01170 GEX (FR)**

(74) Mandataire: **Alatis
3 rue Paul Escudier
75009 Paris (FR)**

(56) Documents cités:
**EP-A1- 3 138 754 EP-A2- 0 115 462
FR-A1- 2 005 890 US-A1- 2017 069 090**

• **MASATO UKAI ET NOBUHIKO NAGAHARA: "A
High-Performance Inspection and Maintenance
System of Track using Continuous Scan Image",
11TH WORLD CONGRESS ON RAILWAY
RESEARCH (WCRR 2016); MILAN, ITALY; 29 MAY
- 2 JUNE 2016,, 1 janvier 2016 (2016-01-01),
XP009508677,**

**Description**

## DOMAINE TECHNIQUE DE L'INVENTION

L'invention se rapporte à l'utilisation d'un véhicule ferroviaire d'auscultation d'une voie ferrée ou de travail sur une voie ferrée, notamment pour sa construction, son entretien, sa maintenance, sa réfection, son renouvellement ou son démontage. Elle se rapporte également au repérage anticipé de points d'intérêts sur une voie ferrée, délimitant le cas échéant des zones d'intérêt pour l'intervention ultérieure d'un outil d'intervention sur la voie, porté et manoeuvré par une machine roulant sur la voie. Elle se rapporte également à la transposition d'un tel repérage pour son utilisation ultérieure, notamment pour une auscultation ultérieure de la voie à l'aide d'un appareillage d'auscultation ou pour intervention ultérieure sur la voie à l'aide d'un outil d'intervention.

## ÉTAT DE LA TECHNIQUE ANTÉRIEURE

Dans le document US4986189 est décrite une machine d'intervention pour la maintenance ou la réfection d'une voie ferrée, qui comporte des outils d'intervention destinés à travailler alors que la machine avance en roulant sur la voie ferrée dans une direction de progression des travaux. Pour anticiper la présence d'obstacles et permettre une commande automatisée du positionnement des outils, une poutre de mesure est disposée à l'avant de la machine. Cette poutre de mesure est disposée horizontalement et perpendiculairement à la direction de la voie et comporte des capteurs alignés permettant de détecter le positionnement transversal du rail. Un autre capteur, constitué par une caméra, surveille les obstacles sur la voie. La poutre de mesure est en outre équipée d'un odomètre. Les signaux des capteurs sont transmis à un circuit de commande des outils avec un retard fonction du signal de l'odomètre et de la distance prédéterminée entre la poutre de mesure et les outils. Il est ainsi possible de disposer la poutre de mesure à distance des outils, sans risque d'interférence avec ceux-ci. Mais ce mode opératoire présuppose que soit connue avec précision la distance prédéterminée entre la poutre de mesure et les outils. Dans la mesure où la précision recherchée pour le positionnement des outils est centimétrique, il est nécessaire de prévoir un châssis commun extrêmement rigide pour supporter les outils d'intervention et la poutre de mesure, afin de créer un référentiel commun. Il présuppose également que la perpendicularité de la poutre de mesure par rapport à la voie soit précise. Par ailleurs, les erreurs odométriques liées par exemple aux glissements ou à l'inscription angulaire de la roue de palpage par rapport à la ligne neutre du rail sont cumulatives. Enfin, ce système ne gère pas les voies courbes.

Dans le document « A High-Performance Inspection and Maintenance System of Track using Continuons Scan Image » par Masato Ukai et Nobuhiko Nagahara, 11th WCRR 2016, est décrit un système d'analyse anticipée d'une voie ferrée en vue d'une intervention ultérieure à l'aide d'un véhicule de maintenance. Ce système d'analyse est monté sur un véhicule ferroviaire dédié, qui peut circuler sur la voie à une vitesse maximale de 45 km/h. Le système d'analyse fait appel à une caméra linéaire disposée sur le véhicule en travers de la voie, couplée à un odomètre, de manière à synchroniser des impulsions de l'odomètre avec des prises de vue linéaires par la caméra linéaire. Le système permet la construction d'une image matricielle (bidimensionnelle) continue de la voie ferrée. L'analyse de l'image matricielle, qui n'est pas effectuée en temps réel, permet de détecter des objets ayant une signature prédéterminée, et notamment des obstacles, pour déterminer des zones de la voie où une intervention est possible et des zones « interdites » ou une intervention automatisée n'est pas possible. Pour corriger les erreurs de mesure de l'odomètre, notamment dans les courbes, il est proposé de recaler régulièrement le signal de l'odomètre en reconnaissant des balises prédéterminées disposées sur la voie et dont la position absolue est connue. Le système d'analyse permet de générer un programme d'intervention qui peut être ultérieurement exécuté à l'aide d'une machine-outil de maintenance portée par un véhicule de maintenance circulant sur la voie ferrée. Mais l'utilisation ultérieure des mesures par le véhicule de maintenance nécessite que ce dernier dispose de ses propres moyens de positionnement par rapport à la voie. Par ailleurs, il n'est pas tenu compte des éventuels défauts de perpendicularité entre la caméra linéaire et la voie.

Le document EP3138754A1 divulgue un procédé de repérage selon le préambule de la revendication 1.

## EXPOSÉ DE L'INVENTION

L'invention vise notamment à remédier aux inconvénients de l'état de la technique et à proposer des moyens permettant un repérage anticipé précis de points ou lignes d'intérêts sur une voie ferrée, délimitant le cas échéant des zones d'intérêt pour l'intervention ultérieure d'un outil porté et entraîné par une machine d'intervention roulant sur la voie.

Selon un mode de réalisation qui ne fait pas partie de l'objet de la protection demandée et qui n'est pas compris dans la portée des revendications, on décrit un procédé de repérage d'une voie ferrée, exécuté par un système de repérage ferroviaire comportant au moins une caméra linéaire visant la voie ferrée et un ou plusieurs odomètres, le système de repérage ferroviaire progressant sur la voie ferrée dans un sens de progression, le procédé de repérage comportant les actions suivantes :

-   on acquiert de façon répétitive, avec le ou les odomètres, des données de progression du système de repérage ferroviaire sur la voie ferrée dans le sens de progression,

- on acquiert de façon répétitive, avec la caméra linéaire visant la voie ferrée, des données optiques linéaires instantanées le long d'une ligne de mesure instantanée,
- par traitement au moins des données optiques linéaires instantanées, et le cas échéant des données de progression, on construit une image matricielle d'une zone de la surface de la voie ferrée,
- par traitement de l'image matricielle construite on identifie, dans l'image matricielle construite, au moins une balise d'indexation spatiale de signature prédéterminée, et par traitement au moins des données de progression, on détermine une abscisse curviligne de la balise d'indexation spatiale et un positionnement de la balise d'indexation spatiale relativement à une ligne de référence de la voie ferrée, et
- on identifie des points ou lignes d'intérêt dans l'image matricielle construite, et on détermine, dans un référentiel bidimensionnel de repérage lié à la balise d'indexation spatiale et à la ligne de référence, des coordonnées des points ou lignes d'intérêt.

La caméra linéaire offre l'avantage d'être très peu sensible aux mouvement parasites, notamment les vibrations subies par le système de repérage progressant sur la voie ferrée, qui peuvent être encore accentuées si le système de repérage est fixé ou attelé à une machine d'intervention sur la voie ferrée. Par ailleurs, le temps de formation d'un pixel de l'image linéaire est plus court par rapport aux technologies matricielles. On réduit ainsi la latence et l'incertitude de positionnement qui serait introduite par une exposition prolongée et un temps de formation trop long.

En prenant une balise d'indexation spatiale et une ligne de référence comme référentiel local pour définir les coordonnées des points ou lignes d'intérêt, on construit un ensemble de données exploitable ultérieurement par un système de transposition lui-même équipé pour identifier la balise d'indexation spatiale et la ligne de référence.

Les données optiques linéaires acquises à un instant donné correspondent à une ligne de l'image matricielle. La construction de l'image matricielle à partir de données optiques linéaire est simple car on ne rencontre pas de problème de recouvrement entre images successives qui serait inhérent à une acquisition par une caméra matricielle. Les courbes se trouvent également « naturellement » redressées dans l'image matricielle construite à partir des données linéaires instantanées de la caméra linéaire, ce qui permet une représentation simplifiée et néanmoins pertinente à l'opérateur.

Suivant un mode de réalisation, l'acquisition des données optiques linéaires instantanées est déclenchée par la réception de données de progression.

Si la résolution spatiale de l'odomètre est élevée, on peut déclencher une ligne d'acquisition de données optiques linéaires à chaque impulsion de l'odomètre, voire toutes les N impulsions, N étant un entier non nul quelconque, ce qui permet d'avoir un pas spatial constant pour les acquisitions successives des lignes de données optiques linéaires.

Suivant un mode de réalisation, les données optiques linéaires instantanées et les données de progression sont acquises de façon synchronisée.

En particulier, si la résolution spatiale de l'odomètre est inférieure à la résolution recherchée pour la construction de l'image matricielle, on peut par exemple observer l'intervalle de temps T entre deux impulsions successives I-1 et I de l'odomètre, diviser cet intervalle de temps par un nombre N entier non nul prédéterminé, et déclencher des lignes d'acquisitions de données optiques linéaires à intervalle de temps constant T/N entre l'impulsion I et l'impulsion 1 + 1 de l'odomètre. On compte le nombre de lignes de mesures jusqu'à l'impulsion 1 + 1, et on en déduit a posteriori le pas spatial d'acquisition des données optiques linéaires dans le sens de progression entre les impulsions I et I+1. En pratique, les variations de vitesse de progression du système de repérage sont faibles à l'échelle d'observation, et l'hypothèse d'une vitesse constante entre deux impulsions successives de l'odomètre conduit à déformation négligeable de l'image matricielle. De manière plus générale, et quel que soit l'algorithme retenu, on peut déclencher la caméra linéaire par exemple à l'aide d'une carte électronique de génération de trains d'impulsions ou d'un bloc logiciel dédié.

Suivant un mode de réalisation, les données de progression et les données optiques linéaires instantanées sont horodatées, l'image matricielle étant de préférence construite en fonction des horodatages. On peut ainsi déterminer un pas spatial, éventuellement variable, entre deux lignes successives de données optiques linéaires, à partir de la connaissance de la résolution spatiale de l'odomètre et des intervalles de temps observés entre deux impulsions de l'odomètre et entre deux lignes de mesure de la caméra linéaire.

Suivant un mode de réalisation, les points ou lignes d'intérêts constituent des bornes d'une zone d'intérêt, de préférence des sommets d'un quadrilatère constituant une zone d'intérêt. De préférence, le système de repérage est apte à identifier, dans l'image matricielle, des intersections entre les traverses de voie ou lignes neutres de traverses de voie d'une part et les rails de la voie ferrée ou des lignes neutres de rail d'autre part, ces intersections constituant au moins certains des points ou lignes d'intérêts.

Les coordonnées des points d'intérêt peuvent être des coordonnées cartésiennes dans un référentiel prenant pour origine la balise d'indexation spatiale, comme axe des abscisses la ligne de référence et comme axe des ordonnées un axe perpendiculaire à la ligne de référence. Dans cette hypothèse, les coordonnées comportent une distance par rapport à la ligne de référence mesurée perpendiculairement à la ligne de référence et une distance par rapport à la balise d'indexation spatiale mesurée parallèlement à la ligne de référence.

La ligne de référence peut être déterminée localement par la donnée de deux points au moins, ou par la donnée d'un point et d'un vecteur directeur, ou par tout autre moyen équivalent. Suivant un mode de réalisation, la ligne de référence est une ligne neutre d'un des rails de la voie ferrée, ou une ligne construite à partir des lignes neutres des rails de la voie ferrée, par exemple une ligne médiane entre les deux rails de la voie ferrée. En pratique, on peut déterminer la ligne neutre d'un rail par exemple en repérant les rebords du rail sur l'image matricielle construite à partir des données linéaires instantanées. On peut également faire appel à une caméra matricielle d'orientation, comme il va être exposé plus loin.

De façon préférentielle, on détermine de façon répétitive, avec un dispositif d'orientation du système de repérage ferroviaire, des données d'orientation angulaire du système de repérage ferroviaire par rapport à la ligne de référence, les coordonnées des points ou lignes d'intérêt étant déterminées en fonction des données d'orientation. La connaissance de l'angle entre la caméra linéaire et la ligne de référence, dans un plan de projection de l'image matricielle, permet de redresser les coordonnées des points d'intérêt et de la balise d'indexation spatiale. En effet, en présence d'un angle non droit entre la caméra linéaire et la ligne de référence, la distance vue par la caméra linéaire entre un point d'intérêt et le rail est supérieure à la distance réelle mesurée perpendiculairement à la ligne de référence. Naturellement, la distance entre deux pixels adjacents de la caméra linéaire est connue, et donnée par des paramètres de calibration.

Suivant un mode de réalisation, le dispositif d'orientation du système de repérage comporte au moins un premier palpeur pour détecter une orientation du système de repérage par rapport à un premier rail de la voie ferrée, constituant un premier rail d'orientation, et comporte de préférence un deuxième palpeur pour détecter une orientation du système de repérage par rapport à un deuxième rail de la voie ferrée, constituant un deuxième rail d'orientation.

Suivant un autre mode de réalisation, le dispositif d'orientation du système de repérage comporte au moins une première caméra matricielle d'orientation disposée en regard d'un premier des rails de la voie ferrée, constituant un premier rail d'orientation, le dispositif d'orientation effectuant avec la première caméra matricielle d'orientation des prises de vue et traitant les prises de vue de manière à y détecter une orientation du premier rail d'orientation par rapport à une mire de la première caméra matricielle d'orientation et comporte de préférence une deuxième caméra matricielle d'orientation disposée en regard d'un deuxième des rails de la voie ferrée, constituant un deuxième rail d'orientation, le dispositif d'orientation effectuant avec la deuxième caméra matricielle d'orientation des prises de vue et traitant les prises de vue de manière à y détecter une orientation du deuxième rail d'orientation par rapport à une mire de la deuxième caméra matricielle d'orientation. Les prises de vue de la ou les caméras linéaires d'orientation peuvent également permettre de déterminer la ligne de référence. Différentes options sont ouvertes pour rapprocher et réconcilier les données issues de la caméra linéaire et de la ou des caméras d'orientation. Suivant une première méthode, on peut effectuer une calibration du système de repérage ferroviaire, de manière à caractériser par des paramètres de calibration le positionnement relatif de la caméra linéaire et du dispositif d'orientation constitué par la ou les caméras d'orientation. A partir de ces données de calibration, il devient possible de transposer à l'image matricielle construite à partir des données optiques linéaires instantanées la ligne directrice du rail détectée dans l'image de la caméra d'orientation. Cette première méthode peut être mise en oeuvre sans détecter la ligne neutre du rail, ou plus généralement la ligne de référence, dans l'image matricielle construite à partir des données optiques linéaires instantanées. Inversement, on peut n'exploiter que les données d'orientation angulaire fournies par le dispositif d'orientation, la ligne de référence étant calculées à partir des seules données de l'image matricielle construite à partir des données linéaires instantanées.

Le cas échéant des corrections peuvent être apportées à l'aide de mesures inertielles réalisées en un point milieu de la poutre ou à l'aide de techniques optiques de mesures de vitesse (qui impliquent la prise d'images matricielles rapprochées avec la caméra d'orientation). Ces approches peuvent aussi être utilisées pour sélectionner une image convenable (à faible dynamique de rotation propre) pour déterminer un angle moyen d'inscription de la poutre par rapport au rail.

On peut le cas échéant mixer une caméra et un palpeur, sur le même rail ou sur deux rails différents. On peut ainsi faire une interpolation entre les données d'orientation délivrées par les deux caméras matricielles d'orientation pour estimer l'orientation de la caméra linéaire. La présence d'au moins un capteur (palpeur ou caméra matricielle) au-dessus de chaque rail de la voie ferrée permet également de pallier l'absence d'un rail sur un tronçon de la voie, notamment lorsque le système de repérage progresse le long d'un appareil de voie, par exemple un aiguillage. On peut également choisir un rail d'orientation spécifique dans les courbes, par exemple le rail situé à l'intérieur de la courbe.

De préférence, les données d'orientation sont horodatées.

Suivant un mode de réalisation, le système de repérage différencie des zones de la surface de la voie ferrée comprenant des traverses et des zones inter-traverses de la surface de la voie, le dispositif d'orientation ne délivrant les données d'orientation qu'une fois pour chacune des zones inter-traverses. Les variations d'orientation étant faibles entre deux traverses, on a avantage à ainsi limiter la masse de données à traiter.

De préférence, on utilise les données d'orientation pour déterminer la ligne de référence.

Pour permettre une intervention humaine sur les points d'intérêt ou les zones d'intérêt identifiées, on peut prévoir la reproduction de l'image matricielle sur un écran de visualisation du système de repérage. De préférence, on prévoit l'identification visuelle sur l'écran de visualisation des points ou lignes d'intérêt.

On peut prévoir une validation et/ou une invalidation de certains au moins des points ou lignes d'intérêt ou de la zone d'intérêt ou d'une qualification de la zone d'intérêt comme d'intervention possible ou zone interdite, suite à une saisie sur une interface homme-machine de saisie.

Suivant un autre mode de réalisation qui ne fait pas partie de l'objet de la protection demandée et qui n'est pas compris dans la portée des revendications, on décrit un procédé de positionnement exécuté par un ensemble de mesure comportant un système de repérage et un système de transposition, le système de repérage comportant une caméra linéaire et un odomètre, le système de transposition comportant une ou plusieurs caméras matricielles de transposition positionnées à distance et en arrière de la caméra linéaire du système de repérage dans un sens de progression, le procédé comportant : une phase de repérage exécutée par le système de repérage et mettant en oeuvre le procédé de repérage précédemment décrit ; puis une phase de transposition exécutée par le système de transposition et comportant les actions suivantes :

- on acquiert avec la ou les caméras matricielles de transposition un ensemble d'une ou plusieurs images matricielles de transposition dans un référentiel spatial du système de transposition ;
- en fonction des données de progression acquises par l'odomètre, on identifie, dans l'ensemble d'une ou plusieurs images matricielles de transposition, la balise d'indexation spatiale et on détermine les coordonnées de la balise d'indexation spatiale et des données caractéristiques de la ligne de référence dans le référentiel spatial du système de transposition, et
- on calcule des coordonnées transposées des points ou lignes d'intérêt dans le référentiel spatial du système de transposition, en fonction des coordonnées de la balise d'indexation spatiale et des données caractéristiques de la ligne de référence dans le référentiel spatial du système de transposition, et des coordonnées des points ou lignes d'intérêt dans le référentiel de repérage.

Suivant un autre mode de réalisation qui ne fait pas partie de l'objet de la protection demandée et qui n'est pas compris dans la portée des revendications, on décrit un procédé de conduite d'une machine d'intervention progressant sur une voie ferrée dans un sens de progression et comportant un outil d'intervention monté sur un châssis d'intervention, à l'aide d'un ensemble de mesure comportant un système de repérage et un système de transposition, le système de repérage comportant au moins une caméra linéaire et un odomètre, le système de transposition comportant au moins une caméra matricielle de transposition positionnée à distance et en arrière de la caméra linéaire du système de repérage dans le sens de progression, la caméra matricielle de transposition étant solidaire du châssis d'intervention de l'outil d'intervention, le procédé comportant : une procédure de positionnement telle que décrite précédemment et une procédure d'intervention comportant le positionnement de l'outil d'intervention en fonction des coordonnées des points ou lignes d'intérêt dans le référentiel de transposition.

L'outil d'intervention peut être de tout type, par exemple un outil de bourrage ou de damage.

Le procédé selon cet aspect peut comporter divers modes de réalisation reprenant les caractéristiques de tout ou partie des modes de réalisation exposés en lien avec le premier aspect

Suivant un autre aspect, qui n'entre pas dans le champ des revendications de la présente demande de brevet, on décrit un véhicule ferroviaire comportant un système de repérage comportant une caméra linéaire et un odomètre, le système de repérage étant apte à exécuter l'un des procédés précédemment décrits, dans l'une ou l'autre de leurs variantes.

Suivant l'invention, objet des revendications de la présente demande, l'invention a trait à un procédé de repérage d'une voie ferrée, exécuté par un système de repérage ferroviaire progressant sur la voie ferrée dans un sens de progression, le procédé de repérage comportant les actions suivantes :

- on acquiert de façon répétitive, avec une caméra linéaire du système de repérage ferroviaire visant la voie ferrée, des données optiques linéaires instantanées le long d'une ligne de mesure instantanée,

- on acquiert de façon répétitive, avec un dispositif d'orientation du système de repérage ferroviaire, des données d'orientation du système de repérage ferroviaire par rapport à une ligne de référence de la voie ferrée,

- par traitement au moins des données optiques linéaires instantanées, on construit une image matricielle potentiellement distordue d'une zone de la surface de la voie ferrée,

- on identifie des points ou lignes d'intérêt dans l'image matricielle potentiellement distordue, et

- on détermine des coordonnées redressées des points ou lignes d'intérêt, en fonction de coordonnées potentiellement distordues des points ou lignes d'intérêt dans un référentiel de l'image matricielle potentiellement distordue et des données d'orientation.

La caméra linéaire offre l'avantage d'être très peu sensible aux vibrations subies par le système de repérage progressant sur la voie ferrée, qui peuvent être encore accentuées si le système de repérage est fixé ou attelé à une machine d'intervention sur la voie ferrée.

Les données optiques linéaires instantanées acquises à un instant donné correspondent à une ligne de l'image matricielle. La ligne de mesure instantanée se déplace, par rapport à la voie ferrée, au fur et à mesure de la progression du système de repérage.

La connaissance de l'angle entre la caméra linéaire et la ligne de référence, dans un plan de projection de l'image matricielle, permet de redresser les coordonnées des points d'intérêt et de la balise d'indexation spatiale. En effet, en présence d'un angle non droit entre la caméra linéaire et la ligne de référence, la distance vue par la caméra linéaire entre un point d'intérêt et le rail est supérieure à la distance réelle mesurée perpendiculairement à la ligne de référence.

Suivant un mode de réalisation, on prévoit que pour acquérir les données d'orientation, un premier palpeur du dispositif d'orientation détecte une orientation du système de repérage par rapport à un premier rail de la voie ferrée, constituant un premier rail d'orientation, et, de préférence, un deuxième palpeur du dispositif d'orientation détecte une orientation du système de repérage par rapport à un deuxième rail de la voie ferrée, constituant un deuxième rail d'orientation.

Suivant un autre mode de réalisation, on prévoit que pour acquérir les données d'orientation, une première caméra matricielle d'orientation du dispositif d'orientation, disposée en regard d'un premier des rails de la voie ferrée constituant un premier rail d'orientation, effectue des prises de vue traitées par le dispositif d'orientation pour y détecter une orientation du premier rail d'orientation par rapport à une mire de la première caméra matricielle d'orientation, et, de préférence une deuxième caméra matricielle d'orientation disposée en regard d'un deuxième des rails de la voie ferrée, constituant un deuxième rail d'orientation, effectue des prises de vue et traitant les prises de vue, traitées par le dispositif d'orientation pour y détecter une orientation du deuxième rail d'orientation par rapport à une mire de la deuxième caméra matricielle d'orientation.

On peut le cas échéant mixer une caméra et un palpeur, sur le même rail ou sur deux rails différents. On peut ainsi faire une interpolation entre les données d'orientation délivrées par les deux caméras matricielles d'orientation pour estimer l'orientation de la caméra linéaire. La présence d'au moins un capteur (palpeur ou caméra matricielle) au-dessus de chaque rail de la voie ferrée permet également de pallier l'absence d'un rail sur un tronçon de la voie, notamment lorsque le système de repérage progresse le long d'un appareil de voie, par exemple un aiguillage. On peut également choisir un rail d'orientation spécifique dans les courbes, par exemple le rail situé à l'intérieur de la courbe.

De préférence, les données d'orientation sont horodatées.

Suivant un mode de réalisation, le système de repérage détecte des zones de la surface de la voie ferrée comprenant des traverses et des zones inter-traverses de la surface de la voie, le dispositif d'orientation ne délivrant les données d'orientation qu'une fois pour chacune des zones inter-traverses. Les variations d'orientation étant faibles entre deux traverses, on a avantage à ainsi limiter la masse de données à traiter.

De préférence, la ligne de référence est une ligne neutre d'un des rails de la voie ferrée, ou une ligne construite à partir des lignes neutres des rails de la voie ferrée. De préférence, on utilise les données d'orientation pour construire la ligne de référence à partir des lignes neutres des rails de la voie ferrée.

Suivant un mode de réalisation particulièrement avantageux, on acquiert de façon répétitive, avec un ou plusieurs odomètres du système de repérage ferroviaire, des données de progression du système de repérage ferroviaire sur la voie ferrée dans le sens de progression.

Suivant une première mise en oeuvre de ce mode de réalisation, l'acquisition des données optiques linéaires instantanées est déclenchée par la réception de données de progression.

Si la résolution spatiale de l'odomètre est élevée, on peut déclencher une ligne d'acquisition de données optiques linéaires à chaque impulsion de l'odomètre, voire toutes les N impulsions, N étant un entier non nul quelconque, ce qui permet d'avoir un pas spatial constant pour les acquisitions successives des lignes de données optiques linéaires.

Suivant une deuxième mise en oeuvre de ce mode de réalisation, les données optiques linéaires instantanées et les données de progression sont acquises de façon synchronisée.

En particulier, si la résolution spatiale de l'odomètre est inférieure à la résolution recherchée pour la construction de l'image matricielle, on peut observer l'intervalle de temps T entre deux impulsions successives 1-1 et I de l'odomètre, diviser cet intervalle de temps par un nombre N entier non nul prédéterminé, et déclencher des lignes d'acquisitions de données optiques linéaires à intervalle de temps constant T/N entre l'impulsion I et l'impulsion I+1 de l'odomètre. On compte le nombre de lignes de mesures jusqu'à l'impulsion I+1, et on en déduit a posteriori le pas spatial d'acquisition des données optiques linéaires dans le sens de progression entre les impulsions I et 1 + 1. En pratique, les variations de vitesse de progression du système de repérage sont faibles à l'échelle d'observation, et l'hypothèse d'une vitesse constante entre deux impulsions successives de l'odomètre conduit à déformation négligeable de l'image matricielle.

Suivant un mode de réalisation, les données de progression et les données optiques linéaires instantanées sont horodatées, l'image matricielle étant de préférence construite en fonction des horodatages. On peut ainsi déterminer un pas spatial, éventuellement variable, entre deux lignes successives de données optiques linéaires, à partir de la connaissance de la résolution spatiale de l'odomètre et des intervalles de temps observés entre deux impulsions de l'odomètre et entre deux lignes de mesure de la caméra linéaire.

Suivant un mode de réalisation particulièrement avantageux, le procédé de repérage est tel que :

- par traitement de l'image matricielle potentiellement distordue on identifie, dans l'image matricielle potentiellement distordue, au moins une balise d'indexation spatiale de signature prédéterminée,

- par traitement des données de progression et des données d'orientation, on détermine une abscisse curviligne de la balise d'indexation spatiale et un positionnement de la balise d'indexation spatiale relativement à la ligne de référence de la voie ferrée, et

- les coordonnées redressées des points ou lignes d'intérêt sont déterminées dans un référentiel bidimensionnel local de repérage lié à la balise d'indexation spatiale et à la ligne de référence.

En prenant une balise d'indexation spatiale et la ligne de référence comme référentiel local pour définir les coordonnées des points ou lignes d'intérêt, on construit un ensemble de données exploitable ultérieurement par un système de transposition lui-même équipé pour identifier la balise d'indexation spatiale et la ligne de référence.

Suivant un mode de réalisation, les points ou lignes d'intérêts constituent des bornes d'une zone d'intérêt, de préférence des sommets d'un quadrilatère constituant une zone d'intérêt. De préférence, le système de repérage est apte à identifier, dans l'image matricielle, des intersections entre des traverses de voie ou lignes neutres de traverses de voie d'une part et les rails de la voie ferrée ou des lignes neutres de rail d'autre part, ces intersections constituant au moins certains des points ou lignes d'intérêts.

Les coordonnées des points d'intérêt peuvent être des coordonnées cartésiennes dans un référentiel prenant pour origine la balise d'indexation spatiale, comme axe des abscisses la ligne de référence et comme axe des ordonnées un axe perpendiculaire à la ligne de référence. Dans cette hypothèse, les coordonnées comportent une distance par rapport à la ligne de référence mesurée perpendiculairement à la ligne de référence et une distance par rapport à la balise d'indexation spatiale mesurée parallèlement à la ligne de référence.

Pour permettre une intervention humaine sur les points d'intérêt ou les zones d'intérêt identifiées, on peut prévoir la reproduction de l'image matricielle sur un écran de visualisation du système de repérage. De préférence, on prévoit l'identification visuelle sur l'écran de visualisation des points ou lignes d'intérêt.

On peut prévoir une validation et/ou une invalidation de certains au moins des points ou lignes d'intérêt ou de la zone d'intérêt ou d'une qualification de la zone d'intérêt comme d'intervention possible ou zone interdite, suite à une saisie sur une interface homme-machine de saisie.

Suivant un autre aspect, qui n'entre pas dans le champ des revendications de la présente demande de brevet, on décrit à un véhicule ferroviaire comportant un système de repérage comportant une caméra linéaire, au moins une caméra matricielle et, de préférence, un odomètre, le système de repérage étant apte à exécuter l'un des procédés précédemment décrits, dans l'une ou l'autre de leurs variantes.

Suivant un autre mode de réalisation qui ne fait pas partie de l'objet de la protection demandée et qui n'est pas compris dans la portée des revendications, on décrit un véhicule ferroviaire comportant un système de repérage comportant une caméra linéaire et un odomètre, ainsi qu'un dispositif d'orientation, qui peut notamment comporter un palpeur ou une caméra matricielle. Ce véhicule peut être autonome ou attelable à un véhicule d'intervention supportant un outil d'intervention ou une centrale d'auscultation de la voie.

Suivant un autre aspect, qui n'entre pas dans le champ des revendications de la présente demande de brevet, on décrit un véhicule ferroviaire, équipé d'un système de repérage positionné dans une première partie du véhicule, et d'un système de transposition positionné dans une deuxième partie du véhicule située à distance et en arrière de la première partie dans un sens de progression du véhicule, le système de repérage comportant une caméra linéaire et un odomètre, ainsi éventuellement qu'un dispositif d'orientation, qui peut notamment comporter un palpeur ou une caméra matricielle, le système de transposition comportant au moins une caméra matricielle de transposition.

Suivant un mode de réalisation préféré, le véhicule ferroviaire est une machine de construction ou de maintenance de voie ferrée, qui comporte en outre au moins un outil d'intervention sur la voie ferrée, disposé dans une troisième partie du véhicule située à distance et en arrière de la deuxième partie dans le sens de progression.

On décrit également des moyens permettant de déterminer le positionnement d'un ensemble d'un ou plusieurs outils porté par un véhicule ferroviaire d'intervention, à partir de données précédemment acquises, concernant notamment le positionnement de points ou lignes d'intérêt dans un référentiel de repérage.

Pour ce faire est proposé, selon un autre mode de réalisation qui ne fait pas partie de l'objet de la protection demandée et qui n'est pas compris dans la portée des revendications, un procédé de commande d'un ensemble d'un ou plusieurs outils montés sur un véhicule ferroviaire d'intervention progressant sur une voie ferrée dans un sens de progression, exécuté par un système de transposition comportant un châssis de transposition montés sur le véhicule ferroviaire d'intervention et une ou plusieurs caméras matricielles de transposition fixées au châssis de transposition, le procédé comportant les actions suivantes :

- réception de données caractérisant une abscisse curviligne d'une balise d'indexation spatiale de signature connue, et un positionnement de la balise d'indexation spatiale par rapport à une ligne de référence de la voie ferrée, et de coordonnées de points ou lignes d'intérêt dans un référentiel bidimensionnel de repérage lié à la balise d'indexation spatiale et à la ligne de référence,

- acquisition avec la ou les caméras matricielles de transposition d'un ensemble d'une ou plusieurs images matricielles de transposition dans un référentiel spatial du système de transposition, fixe par rapport au châssis de transposition ;

- acquisition avec un odomètre de données de progression du système de transposition par rapport à la voie ferrée,

- identification de la balise d'indexation spatiale dans l'ensemble d'une ou plusieurs images matricielles de transposition en fonction des données de progression et des données d'abscisse curviligne,

- détermination de données caractéristiques de la balise d'indexation spatiale et de la ligne de référence dans le référentiel spatial du châssis de transposition,

- calcul de coordonnées transposées des points ou lignes d'intérêt dans le référentiel spatial du système de transposition, en fonction des données caractéristiques de la balise d'indexation spatiale et de la ligne de référence dans le référentiel spatial du système de transposition, et des coordonnées des points ou lignes d'intérêt dans le référentiel de repérage.

Le châssis de transposition est de préférence fixe par rapport à un châssis principal du véhicule ferroviaire, et peut le cas échéant ne former qu'un avec ce châssis principal. Le véhicule ferroviaire est de préférence pourvu de plusieurs trains roulants, qui roulent sur la voie ferrée en supportant le châssis principal.

Les coordonnées des points d'intérêt peuvent être des coordonnées cartésiennes dans un référentiel prenant pour origine la balise d'indexation spatiale, comme axe des abscisses la ligne de référence et comme axe des ordonnées un axe perpendiculaire à la ligne de référence. Dans cette hypothèse, les coordonnées comportent une distance par rapport à la ligne de référence mesurée perpendiculairement à la ligne de référence et une distance par rapport à la balise d'indexation spatiale mesurée parallèlement à la ligne de référence.

De préférence, le procédé comporte en outre une procédure d'intervention comportant le positionnement de l'ensemble d'un ou plusieurs outils en fonction des coordonnées des points ou lignes d'intérêt dans le référentiel de transposition et de données de positionnement de l'ensemble d'un ou plusieurs outils par rapport au châssis de transposition.

L'ensemble d'un ou plusieurs outils peut être de tout type, par exemple un outil de bourrage, de damage ou de boulonnage.

Suivant un mode de réalisation, l'ensemble d'un ou plusieurs outils est mobile par rapport au châssis de transposition, la procédure d'intervention comportant une acquisition des données de positionnement de l'ensemble d'un ou plusieurs outils par rapport au châssis de transposition par un dispositif de mesure de position.

Suivant un mode de réalisation particulièrement adapté à un outil d'intervention, la procédure d'intervention comporte une commande de déplacement de l'ensemble d'un ou plusieurs outils par rapport au châssis de transposition.

Suivant un mode de réalisation, les points ou lignes d'intérêts constituent des bornes ou caractéristiques d'une zone d'intérêt, de préférence des sommets ou côtés d'un quadrilatère constituant la zone d'intérêt. De préférence, la réception de coordonnées de points ou lignes d'intérêt dans un référentiel bidimensionnel de repérage lié à la balise d'indexation spatiale et à la ligne de référence, comporte la réception de données de qualification de la zone d'intérêt comme zone d'intervention possible ou zone interdite, le positionnement de l'ensemble d'un ou plusieurs outils étant effectué uniquement si la zone d'intérêt est une zone d'intervention possible.

Suivant un mode de réalisation, la ligne de référence est une ligne neutre d'un des rails de la voie ferrée, ou une ligne construite à partir des lignes neutres des rails de la voie ferrée.

Suivant un mode de réalisation, la détermination des données caractéristiques de la balise d'indexation spatiale et de la ligne de référence comporte la détermination, de façon répétitive, avec un dispositif d'orientation du système de transposition, de données d'orientation angulaire du système de repérage ferroviaire par rapport à la ligne de référence.

On peut notamment prévoir que le dispositif d'orientation du système de repérage comporte au moins un premier palpeur pour détecter une orientation du système de repérage par rapport à un premier rail de la voie ferrée, constituant un premier rail d'orientation, et comporte de préférence un deuxième palpeur pour détecter une orientation du système de repérage par rapport à un deuxième rail de la voie ferrée, constituant un deuxième rail d'orientation.

On peut également prévoir que le dispositif d'orientation du système de transposition comporte au moins une première caméra matricielle d'orientation disposée en regard d'un premier des rails de la voie ferrée, constituant un premier rail d'orientation. La première caméra matricielle d'orientation est de préférence constituée par une première caméra de transposition parmi la ou les caméras de transposition. Le dispositif d'orientation effectue avec la première caméra matricielle d'orientation des prises de vue et traitant les prises de vue de manière à y détecter une orientation du premier rail d'orientation par rapport à une mire de la première caméra matricielle d'orientation.

Le dispositif d'orientation du système de transposition comporte de préférence une deuxième caméra matricielle d'orientation disposée en regard d'un deuxième des rails de la voie ferrée, constituant un deuxième rail d'orientation. La deuxième caméra matricielle d'orientation est de préférence constituée par une deuxième caméra de transposition parmi la ou les caméras de transposition. Le dispositif d'orientation effectue avec la deuxième caméra matricielle d'orientation des prises de vue et traitant les prises de vue de manière à y détecter une orientation du deuxième rail d'orientation par rapport à une mire de la deuxième caméra matricielle d'orientation.

On peut le cas échéant mixer une caméra et un palpeur, sur le même rail ou sur deux rails différents. On peut ainsi faire une interpolation entre les données d'orientation délivrées par les deux caméras matricielles d'orientation pour estimer l'orientation du châssis de transposition. La présence d'au moins un capteur (palpeur ou caméra matricielle) au-dessus de chaque rail de la voie ferrée permet également de pallier l'absence d'un rail sur un tronçon de la voie, notamment lorsque le système de transposition progresse le long d'un appareil de voie, par exemple un aiguillage. On peut également choisir un rail d'orientation spécifique dans les courbes, par exemple le rail situé à l'intérieur de la courbe.

Suivant un autre aspect, qui n'entre pas dans le champ des revendications de la présente demande de brevet, on décrit un véhicule ferroviaire d'intervention comportant un ensemble d'un ou plusieurs outils d'intervention sur une voie ferrée, ainsi qu'un système de transposition comportant un châssis de transposition supporté par le véhicule ferroviaire d'intervention et une ou plusieurs caméras matricielles de transposition fixées au châssis de transposition.

**BRÈVE DESCRIPTION DES FIGURES**

D'autres caractéristiques et avantages de l'invention ressortiront à la lecture de la description qui suit, en référence aux figures annexées, qui illustrent :

-    la figure 1, une vue schématique de côté d'une machine d'intervention ferroviaire équipée d'un système de repérage et d'un système de transposition pour la mise en oeuvre d'un procédé selon un mode de réalisation de l'invention ;

-    la figure 2, une vue schématique du dessus de certains éléments de la machine d'intervention ferroviaire de la figure 1 ;

-    la figure 3, une vue schématique du système de repérage du véhicule de la figure 1 ;

-    la figure 4, une vue schématique du système de transposition du véhicule de la figure 1 ;

-    la figure 5, une vue schématique d'une zone de voie ferrée à l'aplomb du système de repérage de la figure 3.

Pour plus de clarté, les éléments identiques ou similaires sont repérés par des signes de référence identiques sur l'ensemble des figures.

**DESCRIPTION DÉTAILLÉE DE MODES DE RÉALISATION**

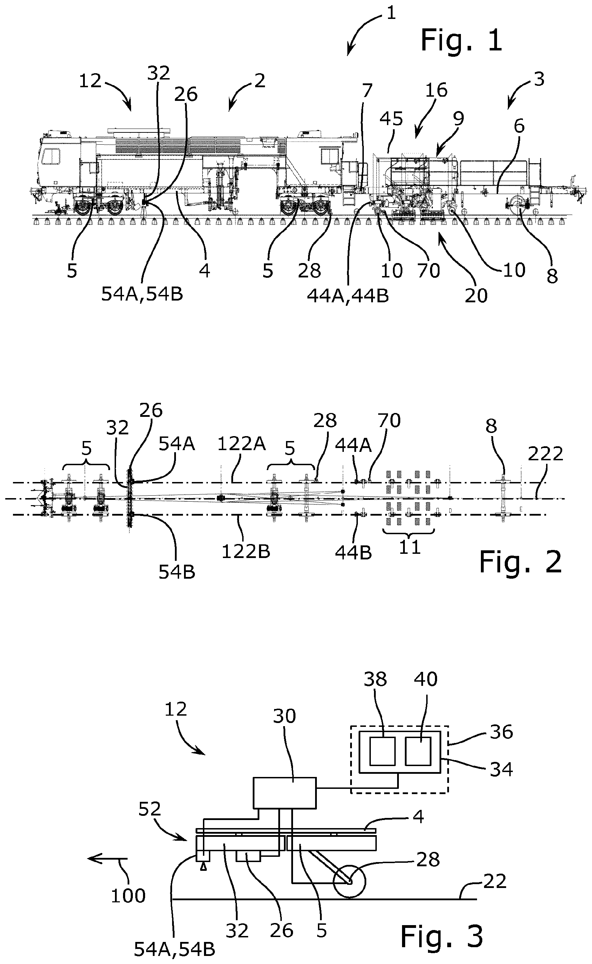

Sur les figures **1** et **2** est illustrée une machine d'intervention ferroviaire **1** composée d'un premier véhicule ferroviaire de repérage **2,** ayant ici également une fonction de traction et d'un deuxième véhicule ferroviaire d'intervention tracté **3**. Le véhicule ferroviaire de repérage **2** est comporte un châssis principal **4** supporté par plusieurs trains de roulement **5** espacés les uns des autres dans une direction longitudinale du véhicule ferroviaire **2** alors que le véhicule ferroviaire d'intervention **3** est une semi-remorque dont le châssis principal **6** est articulé par une extrémité à une attache **7** du véhicule ferroviaire de repérage **2** et supporté à l'extrémité opposée par un train de roulement **8**. Sur le châssis principal **6** du véhicule ferroviaire d'intervention **3** est monté une navette **9** qui roule sur la voie par l'intermédiaire de trains de roulement **10,** et supporte un ensemble d'un ou plusieurs outils d'intervention **11**. Un ensemble d'un ou plusieurs actionneurs (non représenté) permet de déplacer la navette **9** par rapport au châssis principal **6** parallèlement à une direction longitudinale du châssis principal **6**. La machine d'intervention ferroviaire **1** est équipée d'un système de repérage **12** positionné dans le véhicule ferroviaire de repérage **2** et d'un système de transposition **16** positionné sur la navette **9** du véhicule ferroviaire d'intervention **3**, à distance et en arrière du système de repérage, dans un sens de progression **100** de la machine d'intervention **1**, l'ensemble d'un ou plusieurs outils d'intervention **11** sur la voie ferrée **22** étant disposé sur la navette **9** du véhicule ferroviaire d'intervention **3**, à distance et en arrière du système de transposition **16** dans le sens de progression **100**.

Le système de repérage **12** comporte une caméra linéaire **26** et un odomètre **28** reliés à une unité de traitement **30**. La caméra linéaire **26** peut être constituée le cas échéant de plusieurs unités de capteurs, alignées selon une même ligne de mesure. La caméra linéaire **26** est montée sur un châssis de repérage **32** monté sous le châssis principal **4** du véhicule ferroviaire de repérage **2**. L'odomètre **28** est monté sur l'un des trains de roulement **11.1**.

Comme illustré sur la figure 3, le système de repérage **12** comporte en outre une interface homme-machine **34** disposée dans une cabine de contrôle **36** de la machine d'intervention **1**. Cette interface homme-machine **34** comprend un écran **38** et une interface homme-machine de saisie **40**, qui peut être intégrée à l'écran si celui-ci est tactile, ou constituée par exemple par un clavier ou une manette de commande.

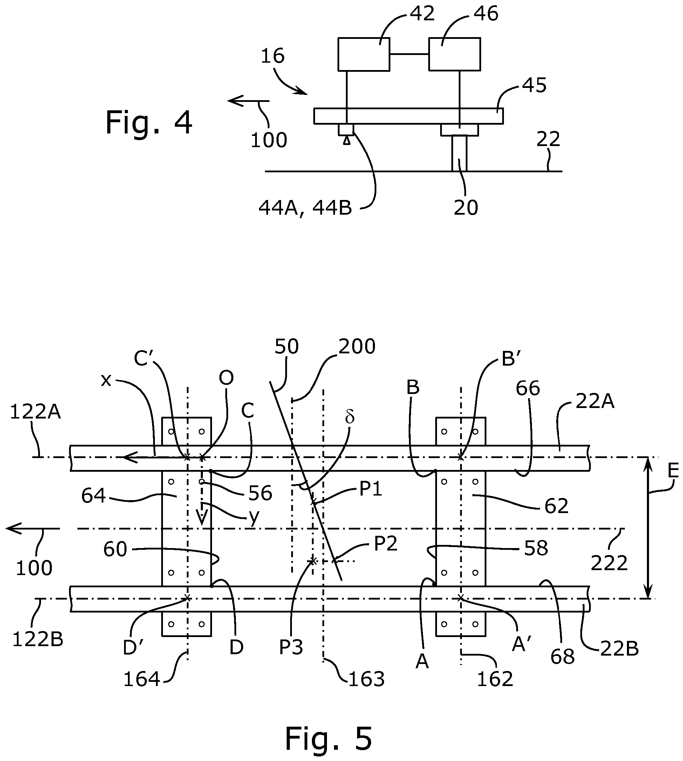

Le système de transposition **16**, illustré schématiquement sur la figure **4**, comporte une unité de commande **42**, reliée à au moins une caméra matricielle de transposition **44A** et à un contrôleur **46** de commande de l'ensemble d'un ou plusieurs outils **11**. La caméra matricielle de transposition **44A** est ici supportée par le châssis **45** de la navette **9** du véhicule ferroviaire d'intervention **3**. Le cas échéant, les unités de commande **42, 30** du système de transposition **16** et du système de repérage **12** peuvent être réunies dans une même unité. L'ensemble d'un ou plusieurs outils **11** peut être de tout type, notamment un outil de bourrage, de damage ou de boulonnage.

Par construction, les rails de la voie ferrée **22** définissent localement un plan de référence, horizontal ou incliné, suivant l'inclinaison de la voie. Dans la mesure où le véhicule ferroviaire de repérage **2** roule sur la voie ferrée **22**, on considère que le châssis **4** du dispositif de repérage est parallèle à ce plan de référence, ce qui constitue une approximation acceptable pour les besoins du repérage de la voie ferrée **22** et de la commande de l'ensemble d'un ou plusieurs outils **11**. Les cellules photosensibles de la caméra linéaire **26** sont dirigées selon une direction perpendiculaire au plan de référence.

Dans le plan de référence, et comme illustré sur la figure **5**, l'orientation de la ligne de mesure **50** définie par la caméra linéaire **26**, est mesurée, dans le plan de référence de la voie, par un angle $\delta$ par rapport à la perpendiculaire **200** à une ligne de référence **122A**, qui dans ce premier mode de réalisation est la ligne neutre de l'un des rails **22A**, **22B** de la voie ferrée **22** pris comme rail de référence **22A**. Cette orientation est considérée comme inconnue. Elle peut varier en fonction du rayon de courbure de la voie ferrée **22**, du positionnement de la caméra linéaire **26** par rapport au trains roulants du véhicule ferroviaire de repérage **2**, et en fonction du lacet du véhicule ferroviaire de repérage **2** par rapport à la voie ferrée **22**.

À chaque impulsion de l'odomètre **28** est déterminée l'abscisse curviligne du système de repérage **12** le long de la ligne de référence **122A.**

À un instant donné, la caméra linéaire **26** capture des données optiques linéaires instantanées constituant une ligne de mesures, qui couvre toute la largeur de la voie ferrée **22**, y compris le cas échéant la largeur des traverses. Cette saisie est répétée et des lignes de mesure successives permettent de construire une image matricielle bidimensionnelle ayant un pas qui est une fonction de la distance parcourue entre deux mesures.

Suivant un premier mode de réalisation, l'odomètre **28** fournit une impulsion à chaque fois qu'une distance élémentaire connue est franchie dans le sens de progression **100** du véhicule ferroviaire de repérage **2** sur la voie ferrée **22**, et ces impulsions successives sont utilisées pour déclencher la caméra linéaire **26**. L'intervalle spatial entre deux lignes successives de l'image matricielle est alors connu et constant.

Suivant un autre mode de réalisation, la caméra linéaire **26** est déclenchée à des intervalles de temps déterminés en divisant l'intervalle de temps observé entre deux impulsions successives de l'odomètre **28**. On observe ainsi le temps T écoulé entre des impulsions I-1 et I de l'odomètre, on divise ce temps T par un entier N non nul prédéterminé, et on utilise, sur l'intervalle de temps séparant l'impulsion I et l'impulsion I+1 de l'odomètre, la période T/N comme intervalle de temps entre deux déclenchements de la caméra linéaire. A posteriori, on observe le déclenchement entre les impulsions I et I+1 de l'odomètre et on en déduit le pas spatial entre deux déclenchements de la caméra linéaire entre les impulsions I et I+1. Si l'on estime que la vitesse de progression varie peu à cette échelle, on peut faire l'hypothèse que le pas est constant entre deux impulsions successives. D'autres hypothèses sont également envisageables, en considérant par exemple que la variation de vitesse (l'accélération ou la décélération) est constante entre deux impulsions, d'où il résulte un pas spatial variable linéairement entre deux impulsions I et 1 + 1.

Suivant un autre mode de réalisation, la caméra linéaire **26** est déclenchée à intervalles réguliers, et les données visuelles images sont horodatées. Les impulsions de l'odomètre **28** sont également horodatées, de manière qu'il est possible de déterminer par interpolation le chemin parcouru entre deux lignes successives de l'image matricielle, qui peut varier.

Suivant une variante de ce dernier mode de réalisation, la caméra linéaire **26** est déclenchée à des intervalles qui ne sont pas nécessairement réguliers, ceci de manière à densifier les mesures dans une zone d'intérêt où une précision accrue s'avère utile, et à les espacer davantage dans des zones sans intérêt, ce qui permet une optimisation du volume des données.

L'image matricielle résultant des saisies successives de la caméra linéaire **26** est distordue, du fait de l'angle $\delta$ entre la perpendiculaire à ligne de référence **122A** et la caméra linéaire **26**. Si l'on considère, dans le plan de référence, un référentiel cartésien dont un axe d'abscisse est parallèle à la ligne de référence **122A** et l'axe des ordonnées perpendiculaire à l'axe des abscisses, on constate que deux points **P1, P2** de la voie ferrée **22** mesurés simultanément par la caméra linéaire **26** à distance l'un de l'autre, et qui apparaissent dans l'image matricielle distordue comme ayant la même abscisse, ont en fait, dans le référentiel cartésien défini précédemment, des abscisses différentes, la différence étant proportionnelle à la distance entre les deux points et au sinus de l'angle $\delta$. Par ailleurs, deux points **P1, P3** de la voie ferrée **22** qui ont la même ordonnée dans le référentiel cartésien précédemment défini, apparaissent distants l'un de l'autre dans l'image matricielle distordue, leur distance apparente étant fonction du cosinus de l'angle $\delta$.

Il est possible de « redresser » l'image distordue en estimant l'angle δ.

Une première estimation de l'angle δ peut être obtenue en comparant, dans une ligne de mesure donnée de la caméra linéaire, la distance mesurée entre deux points d'intérêts connus à un écartement connu entre ces points. Il est ainsi possible d'évaluer dans une ligne de mesure donnée, la distance mesurée entre deux points situés l'un au centre du rail de référence **22A** et l'autre au centre de l'autre rail **22B** de la voie ferrée **22**. Le rapport entre l'écartement des rails **E** et la distance mesurée **D** est égal en valeur absolue au cosinus de l'angle δ :

$$\frac{E}{D} = |cos\delta|$$

Mais, outre que cette estimation de l'angle δ ne permet pas d'en déterminer le signe, la précision de l'estimation est faible pour des valeurs faibles de l'angle δ, la dérivée de la fonction cosinus ayant une valeur proche de zéro. Elle suppose également que l'écartement réel entre les rails soit constant et connu avec la précision souhaitée.

Une deuxième méthode d'estimation peut être mise en oeuvre à partir des images matricielles, en repérant dans l'image matricielle distordue un objet prédéterminé présent sur la voie et dont le contour ou certaines dimensions sont connus, et en comparant le contour apparent ou les dimensions mesurées sur l'image matricielle distordue avec le contour ou les dimensions réelles connues. Mais en pratique, il n'existe pas sur une voie ferrée à des intervalles suffisamment rapprochés des objets qui pourraient servir de comparatifs. En d'autres termes, utiliser cette méthode conduirait à des estimations de l'angle δ trop distantes les unes des autres.

Pour estimer l'angle δ, on fait donc de préférence appel à un dispositif d'orientation **52** lié au châssis de repérage **32**.

Suivant un mode de réalisation, le dispositif d'orientation **52** comporte un palpeur fixé au châssis de repérage.

Suivant un autre mode de réalisation, le dispositif d'orientation **52** comporte au moins une première caméra matricielle d'orientation **54A** fixée au châssis de repérage **32** et ayant une direction de visée perpendiculaire au plan de référence de la voie ferrée **22**, en regard d'un des deux rails **22A, 22B,** par exemple le rail de référence **22A**. L'image matricielle d'orientation, délivrée par la caméra matricielle d'orientation, permet, par traitement d'image, d'identifier la direction de la ligne de référence **122A,** et de déterminer son orientation dans l'image matricielle d'orientation, qui donne directement accès à l'orientation du châssis de repérage **32** donc à l'angle δ de la caméra linéaire **26**.

Pour limiter la puissance de calcul nécessaire pour le traitement de l'image d'orientation de la première caméra matricielle d'orientation **54A,** il est possible de n'effectuer les mesures de l'angle δ que lorsque cela est nécessaire, notamment lorsque l'on estime ou lorsque l'on détermine que l'angle δ est susceptible d'avoir changé.

En pratique, il s'avère que les variations constatées de l'angle δ sont faibles sur un espace inter-traverses. On peut donc avantageusement utiliser l'odomètre **28** pour déclencher la première caméra matricielle d'orientation **54A** à chaque fois qu'une distance prédéterminée a été parcourue sur le rail de référence **22A**, cette distance étant de préférence égale à l'espace inter-traverses. On peut également utiliser les traitements d'image effectués par ailleurs sur l'image matricielle distordue délivrée par la caméra linéaire **26** et déclencher la prise de vue par la première caméra matricielle d'orientation **54A** à chaque fois qu'un nouvel espace inter-traverses est détecté sur l'image matricielle distordue.

On peut également choisir de déclencher la première caméra matricielle d'orientation **54A** lorsque l'on détermine, grâce à une autre donnée mesurée, qu'il est probable que l'angle δ a été modifié. On peut par exemple utiliser à cet effet un accéléromètre positionné sur le châssis de repérage **32**. On peut également utiliser les variations de la distance D mentionnée plus haut, mesurée entre les rails **22A**, **22B** par la caméra linéaire **26**. On peut naturellement également combiner les modes de déclenchement, par exemple en combinant un déclenchement systématique par l'odomètre **28** et un déclenchement supplémentaire en fonction d'une donnée mesurée ou surveillée par ailleurs.

L'amplitude et le signe de l'angle δ étant connus, il est possible de « redresser » l'image matricielle distordue déduite des prises de vues successives de la caméra linéaire **26** et des mesures de distance parcourue, délivrées par l'odomètre **28**.

On peut également limiter cette correction à quelques points d'intérêt identifiés sur l'image distordue sur un espace inter-traverses donné. C'est d'ailleurs la solution privilégiée pour limiter la puissance de calcul nécessaire, dans la mesure où la distorsion constatée sur l'image distordue n'empêche pas de repérer des points d'intérêt par traitement de l'image, sur l'image distordue non redressée.

En pratique, et en supposant que l'on a au préalable déclenché une mesure de l'angle δ, on repère sur l'image matricielle distordue une balise d'indexation spatiale de signature prédéterminée, par exemple un centre de boulon **56** situé à proximité et d'un côté prédéterminé du rail de référence **22A,** ou tout autre composant de voie prédéfini, par exemple un élément d'attache ou un coeur d'aiguillage. Ce repérage peut notamment se faire en comparant l'image matricielle distordue à diverses formes prédéterminées du composant de voie prédéfini, distordues suivant l'angle δ, ou à l'aide d'un réseau neuronal artificiel ou plus généralement une unité d'intelligence artificielle ayant reçu un apprentissage préalable, notamment un apprentissage profond, par exemple par une technique de segmentation d'image pixel par pixel (type SegNet), ou par une technique de détection d'objets (type RFCN). Une fois cette balise d'indexation spatiale **56** identifiée, on lit sur l'image distordue sa distance apparente par rapport à la ligne de référence **122A** et l'on calcule la distance réelle entre la balise d'indexation spatiale **56** et la ligne de référence **122A,** mesurée perpendiculairement à la ligne de référence **122A,** en fonction de l'angle δ. On dispose alors avec la balise d'indexation spatiale **56** et la ligne de référence **122A** (supposée rectiligne à l'échelle d'un espace inter-traverses), d'un référentiel bidimensionnel local de repérage pour l'espace inter-traverses considéré. Pour fixer les idées, ce référentiel peut avoir pour origine la projection 0 de la balise d'indexation spatiale sur la ligne de référence **122A,** perpendiculairement à la ligne de référence **122A,** pour axe des abscisses x la ligne de référence **122A** orientée dans le sens de progression **100** du véhicule **2** et pour axe des ordonnées l'axe y perpendiculaire à l'axe des abscisses x, passant par l'origine 0 (et par la balise d'indexation spatiale **56**).

On s'intéresse ensuite à une zone d'intérêt délimitée par les arêtes transversales **58**, **60** de deux traverses successives **62**, **64** et les arêtes intérieures **66**, **68** des deux rails **22A, 22B** (dont l'éventuelle courbure peut être négligée à cette échelle). Sur la voie, cette zone constitue un quadrilatère qui peut être défini par les intersections **A**, **B**, **C**, **D** entre les arêtes de traverses **58**, **60** et les arêtes intérieures **66**, **68** des deux rails **22A, 22B.** Sur l'image matricielle distordue, le quadrilatère image est lui-même distordu, mais néanmoins repérable par ses sommets. Il suffit alors d'identifier les coordonnées des sommets dans l'image distordue, et d'appliquer le correctif nécessaire en fonction de l'angle δ pour obtenir les coordonnées des sommets **A**, **B**, **C**, **D** dans le référentiel de repérage.

En pratique, le contraste des images n'est pas toujours suffisant pour permettre de déterminer, sur l'image matricielle distordue, les arêtes des traverses et du rail à proximité directe des points d'intersection **A**, **B**, **C**, **D**. Suivant une variante, on préfère donc définir la zone d'intérêt comme un quadrilatère délimité par les intersections **A'**, **B'**, **C'**, **D'**, entre des lignes neutres **162, 164** construites pour chacune des traverses **62**, **64** et des lignes neutres **122A, 122B** construites pour chacun des rails **22A, 22B.** Les lignes neutres sont construites par traitement des images sur l'ensemble de l'espace inter-traverses.

On s'intéresse également à l'identification d'obstacles éventuels dans la zone d'intérêt quadrangulaire <**A**, **B**, **C**, **D**> ou < **A'**, **B'**, **C'**, **D'**>. L'existence ou l'absence de tels obstacles permet de qualifier la zone d'intérêt comme zone d'intervention potentielle (zone autorisée) ou zone d'exclusion potentielle (zone interdite). Indépendamment de la détection d'obstacles, les dimensions de la zone d'intérêt peuvent être utilisées pour qualifier la zone d'intérêt de zone d'intervention potentielle (si l'espace inter-traverses est suffisant pour permettre l'intervention ultérieur) ou de zone interdite.

Les opérations ci-dessus (calcul de l'angle δ, repérage de la balise d'indexation spatiale **56** et calcul de sa distance à la ligne de référence **122A,** repérage du quadrilatère des points d'intérêt <**A**, **B**, **C**, **D**> ou < **A'**, **B'**, **C'**, **D'**> et calcul de leurs coordonnées dans le référentiel de repérage O, x, y défini par la balise d'indexation spatiale **56** et la ligne de référence **122A,** repérage d'éventuels obstacles) sont effectuées de manière cyclique pour chaque espace inter-traverses, et initiées soit par l'odomètre **28**, soit par la reconnaissance d'une arête de traverse dans l'image matricielle distordue. En pratique, on attribue à chaque cycle et à chaque espace inter-traverses un numéro d'ordre.

Ces traitements sont effectués par des algorithmes de reconnaissance de forme. L'interface homme-machine **34** permet le cas échéant de les invalider (si l'on considère que par défaut la reconnaissance automatique est valide) ou de les valider (au moins en mode d'apprentissage, tant que le niveau de confiance sur la reconnaissance de forme est insuffisant). À cet effet, un opérateur peut visualiser l'image distordue qui défile sur l'écran de contrôle **38** de l'interface homme-machine **34**. Le quadrilatère <**A**, **B**, **C**, **D**> ou < **A'**, **B'**, **C'**, **D'**> est matérialisé à l'écran en surimpression, par exemple par un quadrilatère en couleur, et les éventuels obstacles identifiés sont le cas échéant marqués selon une convention visuelle prédéterminée (flèche, contour, etc...). On peut prévoir que s'il est dans un mode de validation, l'opérateur clique avec un pointeur dans la zone d'intérêt pour en confirmer le statut. À l'inverse, on peut prévoir que s'il est en mode de service, l'opérateur clique avec un pointeur dans les zones d'intérêt pour en infirmer le statut. Naturellement, l'on peut prévoir un grand nombre de variantes à l'interaction entre l'opérateur et le système de repérage **12**, suivant l'ergonomie et les objectifs recherchés.

À l'issue de la procédure de repérage décrite précédemment, on dispose pour chaque espace inter-traverses d'un repérage, dans un référentiel local <0, x, y>, des coordonnées de points d'intérêt **A**, **B**, **C**, **D** ou **A'**, **B'**, **C'**, **D'**, délimitant une zone d'intérêt [A, B, C, D] ou [A', B', C', D'], qualifiée comme autorisée ou interdite. On peut également disposer d'autres données telle qu'une ligne inter-traverses.

Ces données sont transmises à l'unité de commande **42** du système de transposition **16**, afin que celui-ci puisse en tirer profit au moment où, suite à l'avancée continue du véhicule ferroviaire d'intervention **3**, le système de transposition **16** se trouve à la hauteur d'un espace prédéterminé préalablement repéré par le système de repérage **12**. Du fait de la courbure de la voie ferrée **22**, le positionnement de la navette **9** par rapport à un espace inter-traverses donné, lorsque la caméra matricielle **44A** du système de transposition **16** se trouve au-dessus dudit espace inter-traverses, est différent du positionnement précédemment pris par le châssis **4** du système de repérage **12**, lorsque la caméra linéaire **26** se trouvait au-dessus du même espace inter-traverses.

Le système de transposition **16** vise à permettre une transposition, c'est-à-dire un changement de référentiel cartésien, entre les coordonnées déterminées par le système de repérage **12** dans le référentiel de repérage <0, x, y> lié à un espace inter-traverses donné, en des coordonnées utilisables au niveau du système de transposition **16**, notamment pour la commande de l'ensemble d'un ou plusieurs outils **11**.

Pour ce faire, la caméra matricielle **44A** du système de transposition **16** est disposée en face du rail de référence **22A**, et a une largeur de champ suffisante pour capter à la fois le rail de référence **22A** et la balise d'indexation spatiale **56**, étant rappelé que celle-ci a été choisie proche du rail de référence **22A**.

Le système de transposition **16** doit en premier lieu être en mesure de déterminer quelles sont les données de repérage attribuables à un instant donné à un espace inter-traverses visualisé par la caméra matricielle **44A** du système de transposition **16**.

Or la connaissance de la géométrie de la machine d'intervention **1** peut s'avérer insuffisante pour estimer même grossièrement la distance entre l'odomètre **28** du système de repérage **12** et la caméra matricielle **44A** du système de transposition **16,** dans la mesure où la navette **9** est supposée mobile par rapport au châssis principal **6** du véhicule ferroviaire d'intervention **3**. On fait donc appel à une mesure supplémentaire, qui peut être fournie par un capteur de position de la navette **9** par rapport au châssis principal **6,** ou par un odomètre facultatif **70** solidaire d'un train de roulement **10** de la navette **2**.

Les mesures combinées du capteur de position de la navette **9** et de l'odomètre **28** du système de repérage **12,** ou alternativement les mesures de l'odomètre **70** du système de transposition **16** permettent de déterminer avec un niveau de confiance suffisant, quelles sont les données de repérage attribuables à un instant donné à un espace inter-traverses visualisé par la caméra matricielle **44A** du système de transposition **16**.

La caméra matricielle de transposition **44A** est liée à un référentiel de transposition fixe par rapport à la navette **9**. Par un traitement de l'image matricielle de la caméra matricielle de transposition **44,** l'unité de transposition **42** identifie le rail de référence **22A,** construit la ligne neutre **122A** qui constitue la ligne de référence, et détermine son orientation dans l'image matricielle, qui donne directement accès à un angle y d'orientation du référentiel de repérage O, x, y par rapport au référentiel de transposition. L'unité de transposition **42** identifie également la balise d'indexation spatiale **56** et construit la projection de la balise d'indexation spatiale **56** sur le rail de référence **22A** perpendiculairement à ce dernier, qui définit l'origine 0 du référentiel de repérage <0, x, y> et ses coordonnées dans le référentiel de transposition. L'unité de transposition **42** peut alors transposer dans le référentiel de transposition les coordonnées des points d'intérêt **A**, **B**, **C**, **D** que le système de repérage **12** lui a transmises dans le référentiel de repérage <0, x, y>.

Sur cette base, il peut transmettre au contrôleur **46** de commande de l'ensemble d'un ou plusieurs outils **11 les** coordonnées transposées de la zone d'intérêt et sa qualification (en tant que zone d'intervention potentielle). Le contrôleur **46** génère alors les commandes qui permettent à l'ensemble d'un ou plusieurs outils **11** d'intervenir ou non dans la zone d'intérêt **A, B, C, D** ainsi délimitée. Le cas échéant, il peut exister un ou plusieurs degrés de liberté de mouvement de l'ensemble d'un ou plusieurs outils **20** par rapport au châssis de transposition **45** supportant la ou les caméras de transposition **44A, 44B**. La commande peut comporter une rotation de l'ensemble d'un ou plusieurs outils **20** autour d'un axe perpendiculaire au plan de référence, ou une translation de l'ensemble d'un ou plusieurs outils **20** dans une direction transversale, pour optimiser le positionnement de l'ensemble d'un ou plusieurs outils **20** par rapport à l'espace inter-traverses. La commande peut également comporter une levée ou une plongée de l'ensemble d'un ou plusieurs outils **20** suivant la qualification de la zone d'intérêt, en tant que zone d'intervention possible ou que zone interdite.

Naturellement, les exemples représentés sur les figures et discutés ci-dessus ne sont donnés qu'à titre illustratif et non limitatif.

La ligne de référence choisie durant la phase de repérage n'est pas nécessairement la ligne sur laquelle est effectuée l'estimation de l'angle $\delta$. On peut le cas échéant choisir la ligne neutre **122B** du rail **22B** pour ligne de référence, et mesurer l'angle $\delta$ par rapport au rail **22A**.

Suivant une variante, la ligne de référence construite par système de repérage **12** est virtuelle, au sens où elle n'est pas liée à un rail spécifique **122**A, **122**B. Il peut s'agir par exemple d'une ligne médiane **222** de la voie ferrée construite à partir des lignes neutres **122A** et **122B** des rails **22A, 22B** de la voie ferrée **22**. On s'affranchit ainsi de singularités, telle que des interruptions de l'un des rails au niveau de certains appareillages de voies.

Cette ligne médiane peut être construite par traitement de l'image matricielle distordue, en recherchant point par point dans chaque ligne de mesure de la caméra linéaire **26** le milieu du segment délimité par les centres des deux rails **22A, 22B**, ou, de préférence, en construisant tout d'abord la ligne neutre **122A, 122B** de chaque rail **22A, 22B**, puis la ligne située à mi-distance des lignes neutres **122A, 122B**.

Dans cette hypothèse d'une ligne de référence virtuelle construite et utilisée par le système de repérage **12,** le système de transposition **16** doit être également en mesure de reconstruire la ligne de référence virtuelle. Pour ce faire, le système de transposition comporte de préférence une deuxième caméra matricielle de transposition **44B** disposée au-dessus et en regard du deuxième rail **22B**.

La deuxième caméra matricielle de transposition **44B** est fixée au châssis de transposition **45** de la navette **9** de manière que le positionnement relatif des deux caméras matricielles de transposition **44A**, **44B** soit connu et étalonné. Bien que chaque caméra matricielle de transposition **44A**, **44B** n'ait qu'une largeur de champ réduite ne lui permettant de visualiser que le rail **22A**, **22B** au-dessus duquel elle se trouve, on peut déterminer le positionnement de la ligne médiane **222** entre les lignes neutres **122A**, **122B** en déterminant le positionnement de la ligne neutre **122A** du premier **rail 22A** dans l'image matricielle de la première caméra de transposition **44A,** en déterminant le positionnement de la ligne neutre **122B** du deuxième rail **22B** dans l'image matricielle de la deuxième caméra de transposition **44B** et en calculant le centre du segment de droite entre les deux lignes neutres **122A**, **122B** à partir de ces mesures et des données d'étalonnage de la distance entre les deux caméras de transposition **44A**, **44B.**

Suivant une variante du système de repérage **12**, ce dernier comporte une deuxième caméra matricielle d'orientation **54B** fixée au châssis **4** du véhicule de repérage **4** et ayant une direction de visée perpendiculaire au plan de référence de la voie ferrée **22**, en regard de l'autre rail **22B**. La deuxième caméra matricielle d'orientation **54B** peut être utilisée pour donner une deuxième valeur de l'angle $\delta$, mesurée par rapport au deuxième rail **22B**. Différents algorithmes peuvent être mis en oeuvre pour exploiter ces données. On peut par exemple attribuer un indice de confiance à chaque image matricielle délivrée par l'une ou l'autre des caméras matricielles d'orientation, par exemple en fonction du contraste de l'image, de la présence ou non du rail dans l'image ou de tout autre critère, le tout pour retenir, pour chaque espace inter-traverses, la mesure de l'angle $\delta$ ayant le meilleur indice de confiance. On peut également combiner les mesures effectuées pour calculer un angle $\delta$ « moyen ». Dans la mesure où la distance entre les deux caméras matricielles d'orientation **54A, 54B** est connue et étalonnée, il est également possible d'utiliser ces caméras pour déterminer la ligne de référence virtuelle **222** évoquée précédemment. On peut enfin envisager deux voies de mesure et de calcul indépendantes, l'une utilisant la première caméra matricielle d'orientation **54A** et la première caméra matricielle de transposition **44A** par rapport à une première ligne de référence **122**A, et l'autre utilisant la deuxième caméra matricielle d'orientation **54B** et la deuxième caméra matricielle de transposition **44B** par rapport à une première ligne de référence **122B**. Le cas échéant, on peut également prévoir deux odomètres au niveau du système de surveillance, un pour chaque rail **22**A, **22B**, et chacun dédié à l'une des deux voies de mesure et de calcul.

Dans la phase de repérage, l'identification de points d'intérêt n'est pas limitée à l'identification des sommets **A**, **B**, **C**, **D** ou **A'**, **B'**, **C'**, **D'** d'un quadrilatère d'intervention potentielle. D'autres types de points d'intérêt peuvent être identifiés, par exemple des coordonnées de centres de têtes de vis à visser ou à changer. Une zone d'intervention n'est pas nécessairement un quadrilatère, mais peut être un polygone quelconque. On peut également chercher à identifier - à la place ou en plus des points d'intérêt **A**, **B**, **C**, **D** - des lignes d'intérêt, par exemple les droites constituant les lignes neutres **162, 164** des traverses **62**, **64**, situées chacune au centre de la traverses **62**, **64** correspondante, ou la droite **163** constituant la ligne inter-traverses, qui est l'axe symétrie pour les droites précédentes **162**, **164**, située à mi-chemin entre deux traverses **62**, **64**. Dans le référentiel local <0, x, y> les coordonnées de telles lignes droites peuvent par exemple être celles de deux points leur appartenant, ou les coordonnées d'un point de la ligne et d'un angle.

Bien que l'exposé précédent ait été focalisé sur l'espace inter-traverses, il est également possible d'analyser avec le système de repérage les portions de voie comprenant les traverses, notamment pour y détecter de points d'intérêt nécessitant une intervention.

Le traitement des données de l'odomètre **28**, de la caméra linéaire **26** et du dispositif d'orientation **52** par le système de repérage **12** est fait en temps réel, ou très légèrement différé, de manière à pouvoir être utilisé par le système de transposition **16** appartenant à la même machine d'intervention **10** avançant continument. La distance entre le système de repérage **12**, situé dans une zone avant **14** du véhicule de repérage **2** dans le sens de progression **100** d'une part, et le système de transposition **16,** situé à distance et vers l'arrière du véhicule, d'autre part, est mise à profit notamment pour permettre à un opérateur de valider ou d'invalider les points d'intérêt **A**, **B**, **C**, **D** ou leur qualification.

Alternativement, on peut faire avancer la machine d'intervention **10** dans une direction pour le repérage, puis lui faire rebrousser chemin pour, lors d'une deuxième passe, effectuer la transposition et la commande de l'ensemble d'un ou plusieurs outils. Lors de la transposition, le véhicule peut avancer en sens inverse de la direction d'avance durant le repérage, ou dans la même direction.

La machine d'intervention ferroviaire **10** dont il est question peut être constitué d'un ou plusieurs véhicules articulés entre eux. Le cas échéant, Ainsi, le système de repérage **12,** le système de transposition **16** et l'ensemble d'un ou plusieurs outils **11** peuvent être sur un seul et même véhicule. Suivant un autre mode de réalisation, le système de repérage **12** peut être monté sur un chariot roulant sur la voie et articulé à l'avant d'une unité roulante portant le système de transposition **16** et l'ensemble d'un ou plusieurs outils **11**.

On peut également envisager que le système de repérage **12** soit monté sur un véhicule de repérage autonome indépendant de la machine d'intervention **10** portant l'ensemble d'un ou plusieurs outils **11**. Dans cette dernière hypothèse, il est avantageux de prévoir sur le véhicule de repérage une centrale de positionnement absolu, par exemple une centrale GPS, pour pouvoir attribuer à chaque espace inter-traverses des coordonnées dans le référentiel de positionnement absolu, ce dernier étant suffisamment précis pour discriminer deux espaces inter-traverses successifs.

Le cas échéant, l'ensemble d'un ou plusieurs outils **20** peut être fixe par rapport au châssis principal **6** du véhicule d'intervention **3.** Il est alors possible d'estimer grossièrement le positionnement de l'ensemble d'un ou plusieurs outils **20** à partir des seules données de l'odomètre **28** du système de repérage **12**, pour déterminer quelles sont, à un instant donné, les données de repérage pertinentes pour la transposition.

Bien que la description ait plus particulièrement porté sur l'utilisation de la procédure de transposition pour la commande d'un outil d'intervention, la transposition peut également être mise à profit pour opérer une auscultation précise de la voie à l'aide d'un instrument d'auscultation portée par un châssis distant du châssis de repérage.

L'interface homme-machine **34** peut être déportée par rapport au véhicule **10**, par exemple située dans un poste de contrôle distant.

## Revendications

1. Procédé de repérage d'une voie ferrée (22), exécuté par un système de repérage ferroviaire (12) progressant sur la voie ferrée (22) dans un sens de progression (100), le procédé de repérage comportant les actions suivantes :

- on acquiert de façon répétitive, avec une caméra linéaire (26) du système de repérage ferroviaire (12) visant la voie ferrée (22), des données optiques linéaires instantanées le long d'une ligne de mesure instantanée (50),
-
- par traitement au moins des données optiques linéaires instantanées, on construit une image matricielle potentiellement distordue d'une zone de la surface de la voie ferrée (22), et
- on identifie des points ou lignes d'intérêt (A, B, C, D, A', B', C', D', 162, 163, 164) dans l'image matricielle potentiellement distordue,

**caractérise en ce que** :

- on acquiert de façon répétitive, avec un dispositif d'orientation (52) du système de repérage ferroviaire (12), des données d'orientation du système de repérage ferroviaire (12) par rapport à une ligne de référence (22A) de la voie ferrée (22), et

- on détermine des coordonnées redressées des points ou lignes d'intérêt (A, B, C, D, A', B', C', D', 162, 163, 164), en fonction de coordonnées potentiellement distordues des points ou lignes d'intérêt (A, B, C, D, A', B', C', D', 162, 163, 164) dans un référentiel de l'image matricielle potentiellement distordue et des données d'orientation.

2. Procédé selon la revendication 1, **caractérisé en ce que** pour acquérir les données d'orientation, un premier palpeur du dispositif d'orientation (52) détecte une orientation du système de repérage (12) par rapport à un premier rail (22A) de la voie ferrée, constituant un premier rail d'orientation (22A), et, de préférence, un deuxième palpeur du dispositif d'orientation (52) détecte une orientation du système de repérage (12) par rapport à un deuxième rail (22B) de la voie ferrée, constituant un deuxième rail d'orientation (22B).

3. Procédé selon l'une quelconque des revendications précédentes, **caractérisé en ce que** pour acquérir les données d'orientation, une première caméra matricielle d'orientation (54A) du dispositif d'orientation (52), disposée en regard d'un premier des rails de la voie ferrée constituant un premier rail d'orientation (22A), effectue des prises de vue traitées par le dispositif d'orientation (52) pour y détecter une orientation du premier rail d'orientation (22A) par rapport à une mire de la première caméra matricielle d'orientation (54A), et, de préférence une deuxième caméra matricielle d'orientation (54B) disposée en regard d'un deuxième des rails de la voie ferrée, constituant un deuxième rail d'orientation (22A), effectue des prises de vue traitées par le dispositif d'orientation (52) pour y détecter une orientation du deuxième rail d'orientation (22A) par rapport à une mire de la deuxième caméra matricielle d'orientation (54B).

4. Procédé selon l'une quelconque des revendications précédentes, **caractérisé en ce que** le système de repérage (12) détecte des zones de la surface de la voie ferrée (22) comprenant des traverses (62, 64) et des zones inter-traverses de la surface de la voie (22), le dispositif d'orientation ne délivrant les données d'orientation qu'une fois pour chacune des zones inter-traverses.

5. Procédé selon l'une quelconque des revendications précédentes, **caractérisé en ce que** la ligne de référence (122A, 122B, 222) est une ligne neutre d'un des rails (22A, 22B) de la voie ferrée (22), ou une ligne construite à partir des lignes neutres (122A, 122B) des rails (22A, 22B) de la voie ferrée (22).

6. Procédé selon l'une quelconque des revendications précédentes, **caractérisé en ce que** l'on utilise les données d'orientation pour construire la ligne de référence (222) à partir des lignes neutres (122A, 122B) des rails (22A, 22B) de la voie ferrée (22).

7. Procédé selon l'une quelconque des revendications précédentes, **caractérisé en ce que** l'on acquiert de façon répétitive, avec un ou plusieurs odomètres (28) du système de repérage ferroviaire (12), des données de progression du système de repérage ferroviaire (12) sur la voie ferrée (22) dans le sens de progression (100).

8. Procédé selon la revendication 7, **caractérisé en ce que** l'acquisition des données optiques linéaires instantanées est déclenchée par la réception de données de progression.

9. Procédé selon la revendication 7, **caractérisé en ce que** les données optiques linéaires instantanées et les données de progression sont acquises de façon synchronisée.

10. Procédé selon l'une quelconque des revendications 7 à 9, **caractérisé en ce que** les données de progression et les données optiques linéaires instantanées sont horodatées, l'image matricielle étant de préférence construite en fonction des horodatages.

11. Procédé de repérage selon l'une quelconque des revendications 7 à 10, caractérisé en ce :

    - par traitement de l'image matricielle potentiellement distordue on identifie, dans l'image matricielle potentiellement distordue, au moins une balise d'indexation spatiale (56) de signature prédéterminée,
    - par traitement des données de progression et des données d'orientation, on détermine une abscisse curviligne de la balise d'indexation spatiale (56) et un positionnement de la balise d'indexation spatiale (56) relativement à la ligne de référence (122A, 122B, 222) de la voie ferrée (22), et
    - les coordonnées redressées des points ou lignes d'intérêt (A, B, C, D, A', B', C', D', 162, 163, 164) sont déterminées dans un référentiel bidimensionnel local de repérage lié à la balise d'indexation spatiale (56) et à la ligne de référence (122A, 122B, 222).

12. Procédé selon l'une quelconque des revendications précédentes, **caractérisé en ce que** les points ou lignes d'intérêts (A, B, C, D, A', B', C', D', 162, 163, 164) constituent des bornes d'une zone d'intérêt, de préférence des sommets d'un quadrilatère constituant une zone d'intérêt.

13. Procédé de repérage selon l'une quelconque des revendications précédentes, **caractérisé en ce qu'**il comprend la reproduction de l'image matricielle sur un écran de visualisation (38) du système de repérage (12).

14. Procédé de repérage selon la revendication 13, **ca-**

**ractérisé en ce qu'**il comporte l'identification visuelle sur l'écran de visualisation (38) des points ou lignes d'intérêt (A, B, C, D, A', B', C', D', 162, 163, 164).

15. Procédé de repérage selon l'une quelconque des revendications 13 à 14, en combinaison avec la revendication 12, **caractérisé en ce qu'**il comporte une validation et/ou une invalidation de certains au moins des points ou lignes d'intérêt ou de la zone d'intérêt ou d'une qualification de la zone d'intérêt comme d'intervention possible ou zone interdite, suite à une saisie sur une interface homme-machine de saisie (40).

**Patentansprüche**

1. Vermarkungsverfahren zum Vermarken eines Gleises (22), ausgeführt durch ein Eisenbahnvermarkungssystem (12), das auf dem Gleis (22) in einer Fortschrittsrichtung (100) fortschreitet, wobei das Vermarkungsverfahren die folgenden Aktionen umfasst:

    - wiederholtes Erfassen momentaner linearer optischer Daten entlang einer momentanen Messlinie (50) mit einer auf das Gleis (22) gerichteten Zeilenkamera (12) des Eisenbahnvermarkungssystems (12),
    - durch Verarbeiten mindestens der momentanen linearen optischen Daten Konstruieren einer möglicherweise verzerrten Rastergrafik eines Bereichs der Oberfläche des Gleises (22), und
    - Identifizieren von Punkten oder Linien von Interesse (A, B, C, D, A', B', C', D', 162, 163, 164) in der möglicherweise verzerrten Rastergrafik, **gekennzeichnet durch**:
    - wiederholtes Erfassen von Ausrichtungsdaten des Eisenbahnvermarkungssystems (12) in Bezug auf eine Bezugslinie (22A, 122B, 222) des Gleises (22) mit einer Ausrichtungsvorrichtung (52) des Eisenbahnvermarkungssystems (12), und
    - Bestimmen begradigter Koordinaten der Punkte oder Linien von Interesse (A, B, C, D, A', B', C', D', 162, 163, 164) in Abhängigkeit von möglicherweise verzerrten Koordinaten der Punkte oder Linien von Interesse (A, B, C, D, A', B', C', D', 162, 163, 164) in einem Bezugssystem der möglicherweise verzerrten Rastergrafik und Ausrichtungsdaten.

2. Verfahren nach Anspruch 1, **dadurch gekennzeichnet, dass** zum Erfassen von Ausrichtungsdaten ein erster Messfühler der Ausrichtungsvorrichtung (52) eine Ausrichtung des Vermarkungssystems (12) in Bezug auf eine erste Schiene (22A) des Gleises detektiert, die eine erste Ausrichtungsschiene (22A) bildet, und ein zweiter Messfühler der Ausrichtungsvorrichtung (52) vorzugsweise eine Ausrichtung des Vermarkungssystems (12) in Bezug auf eine zweite Schiene (22B) des Gleises, die eine zweite Ausrichtungsschiene (22B) bildet, detektiert.

3. Verfahren nach einem der vorhergehenden Ansprüche, **dadurch gekennzeichnet, dass** zum Erfassen der Ausrichtungsdaten eine erste Ausrichtungsrasterkamera (54A) der Ausrichtungsvorrichtung (52), die gegenüber einer ersten der Schienen des Gleises angeordnet ist, die eine erste Ausrichtungsschiene (22A) bildet, Aufnahmen macht, die von der Ausrichtungsvorrichtung (52) verarbeitet werden, um darin eine Ausrichtung der ersten Ausrichtungsschiene (22A) in Bezug auf ein Testbild der ersten Ausrichtungsrasterkamera (54A) zu detektieren, und vorzugsweise eine zweite Ausrichtungsrasterkamera (54B), die gegenüber einer zweiten der Schienen des Gleises angeordnet ist, die eine zweite Ausrichtungsschiene (22A) bildet, Aufnahmen macht, die von der Ausrichtungsvorrichtung (52) verarbeitet werden, um darin eine Ausrichtung der zweiten Ausrichtungsschiene (22A) in Bezug auf ein Testbild der zweiten Ausrichtungsrasterkamera (54B) zu detektieren.

4. Verfahren nach einem der vorhergehenden Ansprüche, **dadurch gekennzeichnet, dass** das Vermarkungssystem (12) Bereiche der Oberfläche des Gleises (22) detektiert, die Schwellen (62, 64) und Bereiche zwischen Schwellen der Oberfläche des Gleises (22) enthalten, wobei die Ausrichtungsvorrichtung für jeden Bereich zwischen Schwellen die Ausrichtungsdaten nur einmal bereitstellt.

5. Verfahren nach einem der vorhergehenden Ansprüche, **dadurch gekennzeichnet, dass** die Bezugslinie (122A, 122B, 222) eine neutrale Linie einer der Schienen (22A, 22B) des Gleises (22) oder eine ausgehend von den neutralen Linien (122A, 122B) der Schienen (22A, 22B) des Gleises (22) konstruierte Linie ist.

6. Verfahren nach einem der vorhergehenden Ansprüche, **dadurch gekennzeichnet, dass** die Ausrichtungsdaten verwendet werden, um aus den neutralen Linien (122A, 122B) der Schienen (22A, 22B) des Gleises (22) ausgehend die Bezugslinie (222) zu konstruieren.

7. Verfahren nach einem der vorhergehenden Ansprüche, **dadurch gekennzeichnet, dass** Fortschrittsdaten des Eisenbahnvermarkungssystems (12) auf dem Gleis (22) in Fortschrittsrichtung (100) mit einem oder mehreren Hodometern (28) des Eisenbahnvermarkungssystems (12) wiederholt erfasst werden.

8. Verfahren nach Anspruch 7, **dadurch gekennzeichnet, dass** die Erfassung der momentanen linearen optischen Daten durch den Empfang von Fortschrittsdaten ausgelöst wird.

9. Verfahren nach Anspruch 7, **dadurch gekennzeichnet, dass** die momentanen linearen optischen Daten und die Fortschrittsdaten synchronisiert erfasst werden.

10. Verfahren nach einem der Ansprüche 7 bis 9, **dadurch gekennzeichnet, dass** die Fortschrittsdaten und die momentanen linearen optischen Daten mit einem Zeitstempel versehen sind, wobei die Rastergrafik vorzugsweise in Abhängigkeit von den Zeitstempeln konstruiert wird.

11. Vermarkungsverfahren nach einem der Ansprüche 7 bis 10, **dadurch gekennzeichnet, dass**:

- durch Verarbeiten der möglicherweise verzerrten Rastergrafik in der möglicherweise verzerrten Rastergrafik mindestens eine Markierung zur räumlichen Indexierung (56) mit einer vorbestimmten Signatur identifiziert wird,
- durch Verarbeiten der Fortschrittsdaten und der Ausrichtungsdaten eine gebogene Abszissenachse der Markierung zur räumlichen Indexierung (56) und eine Positionierung der Markierung zur räumlichen Indexierung (56) in Bezug auf die Bezugslinie (122A, 122B, 222) des Gleises (22) bestimmt wird, und
- die begradigten Koordinaten der Punkte oder Linien von Interesse (A, B, C, D, A', B', C', D', 162, 163, 164) in einem mit der Markierung zur räumlichen Indexierung (56) und der Bezugslinie (122A, 122B, 222) verknüpften lokalen zweidimensionalen Bezugssystem bestimmt werden.

12. Verfahren nach einem der vorhergehenden Ansprüche, **dadurch gekennzeichnet, dass** die Punkte oder Linien von Interesse (A, B, C, D, A', B', C', D', 162, 163, 164) Grenzen eines Bereichs von Interesse bilden, vorzugsweise Scheitel oder Seiten eines Vierecks, das den Bereich von Interesse bildet.

13. Vermarkungsverfahren nach einem der vorhergehenden Ansprüche, **dadurch gekennzeichnet, dass** es das Wiedergeben der Rastergrafik auf einem Anzeigebildschirm (38) des Vermarkungssystems (12) enthält.

14. Vermarkungsverfahren nach Anspruch 13, **dadurch gekennzeichnet, dass** es die visuelle Identifizierung auf dem Anzeigebildschirm (38) der Punkte oder Linien von Interesse (A, B, C, D, A', B', C', D', 162, 163, 164) umfasst.

15. Vermarkungsverfahren nach einem der Ansprüche 13 bis 14 in Kombination mit Anspruch 12, **dadurch gekennzeichnet, dass** es nach einer Eingabe an einer Mensch-Maschine-Schnittstelle zur Eingabe (40) eine Validierung und/oder eine Invalidierung mindestens einiger der Punkte oder Linien von Interesse oder des Bereichs von Interesse oder eine Einordnung des Bereichs von Interesse als möglichen Eingriffsbereich oder untersagten Bereich umfasst.

**Claims**

1. Location method for a railway track (22), carried out by a railway location system (12) traveling on the railway track (22) in a direction of travel (100), the location method comprising the following actions:

   - repeatedly acquiring, by means of a line-scan camera (26) of the railway location system (12) aimed at the railway track (22), instantaneous linear optical data along an instantaneous measurement line (50),
   - constructing a potentially distorted raster image of a region of the surface of the railway track (22) by processing at least the instantaneous linear optical data, and
   - identifying points or lines of interest (A, B, C, D, A', B', C', D', 162, 163, 164) in the potentially distorted raster image, **characterized in that**:
   - data on the orientation of the railway location system (12) with respect to a reference line (22A) of the railway track (22) is repeatedly acquired using an orientation device (52) of the railway location system (12), and
   - rectified coordinates of the points or lines of interest (A, B, C, D, A', B', C', D', 162, 163, 164) are determined on the basis of potentially distorted coordinates of the points or lines of interest (A, B, C, D, A', B', C', D', 162, 163, 164) in a repository of the potentially distorted raster image and orientation data.

2. Method according to claim 1, **characterized in that**, in order to acquire the orientation data, a first sensor of the orientation device (52) detects an orientation of the location system (12) with respect to a first rail (22A) of the railway track, which first rail constitutes a first orientation rail (22A), and, preferably, a second sensor of the orientation device (52) detects an orientation of the location system (12) with respect to a second rail (22B) of the railway track, which second rail constitutes a second orientation rail (22B).

3. Method according to either of the preceding claims, **characterized in that**, in order to acquire the orientation data, a first orientation matrix camera (54A) of the orientation device (52) arranged facing a first of the rails of the railway track, which first rail constitutes a first orientation rail (22A), captures images processed by the orientation device (52) so as to detect therein an orientation of the first orientation rail (22A) with respect to a target of the first orientation matrix camera (54A), and, preferably, a second orientation matrix camera (54B) arranged facing a second of the rails of the railway track, which second rail constitutes a second orientation rail (22A), captures images processed by the orientation device (52) so as to detect therein an orientation of the second orientation rail (22A) with respect to a target of the second orientation matrix camera (54B).

4. Method according to any of the preceding claims, **characterized in that** the location system (12) detects regions of the surface of the railway track (22) comprising crossties (62, 64) and inter-crosstie regions of the surface of the track (22), the orientation device delivering the orientation data only once for each of the inter-crosstie regions.

5. Method according to any of the preceding claims, **characterized in that** the reference line (122A, 122B, 222) is a neutral axis of one of the rails (22A, 22B) of the railway track (22) or is a line constructed from the neutral axes (122A, 122B) of the rails (22A, 22B) of the railway track (22).

6. Method according to any of the preceding claims, **characterized in that** the orientation data are used to construct the reference line (222) from the neutral axes (122A, 122B) of the rails (22A, 22B) of the railway track (22).

7. Method according to any of the preceding claims, **characterized in that** one or more odometers (28) of the railroad location system (12) are used to repeatedly acquire travel data of the railway location system (12) on the railway track (22) in the direction of travel (100).

8. Method according to claim 7, **characterized in that** the acquisition of the instantaneous linear optical data is triggered by travel data being received.

9. Method according to claim 7, **characterized in that** the instantaneous linear optical data and the travel data are acquired in a synchronized manner.

10. Method according to any of claims 7 to 9, **characterized in that** the travel data and the instantaneous linear optical data are timestamped, the raster image preferably being constructed on the basis of the timestamps.

11. Location method according to any of claims 7 to 10, **characterized in that**:

   - at least one spatial indexing marker (56) with a predetermined signature is identified in the potentially distorted raster image by processing the potentially distorted raster image,
   - a curvilinear abscissa of the spatial indexing marker (56) and a positioning of the spatial indexing marker (56) relative to the reference line (122A, 122B, 222) of the railway track (22) are determined by processing the travel data and the orientation data, and
   - the rectified coordinates of the points or lines of interest (A, B, C, D, A', B', C', D', 162, 163, 164) are determined in a local two-dimensional location repository linked to the spatial indexing marker (56) and to the reference line (122A, 122B, 222).

12. Method according to any of the preceding claims, **characterized in that** the points or lines of interest (A, B, C, D, A', B', C', D', 162, 163, 164) constitute boundaries of a region of interest, preferably vertices of a quadrilateral constituting a region of interest.

13. Location method according to any of the preceding claims, **characterized in that** it comprises reproducing the raster image on a display screen (38) of the location system (12).

14. Location method according to claim 13, **characterized in that** it comprises visually identifying, on the display screen (38), the points or lines of interest (A, B, C, D, A', B', C', D', 162, 163, 164).

15. Location method according to either claim 13 or claim 14, in combination with claim 12, **characterized in that** it comprises validating and/or invalidating at least some of the points or lines of interest or the region of interest, or qualifying the region of interest as a possible intervention or prohibited region, following an input on a man-machine input interface (40).

Fig. 1

Fig. 2

Fig. 3

Fig. 4

Fig. 5

EP 3 740 411 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4986189 A

- EP 3138754 A1

**Littérature non-brevet citée dans la description**

- **MASATO UKAI ; NOBUHIKO NAGAHARA.** A High-Performance Inspection and Maintenance System of Track using Continuons Scan Image. *11th WCRR 2016*